# EUROPÄISCHE PATENTSCHRIFT

(11) **EP 2 453 538 B1**
(45) Veröffentlichungstag und Bekanntmachung des Hinweises auf die Patenterteilung: **15.06.2016**
(21) Anmeldenummer: 10014456.7
(22) Anmeldetag: 10.11.2010
(51) Int. Cl.: H02B 1/32

(54) **Elektrischer Schalt- und Verteilerschrank**
Electrical switch and/or distribution cabinet
Armoire de commutation et de distribution électrique

(43) Veröffentlichungstag der Anmeldung: 16.05.2012
(73) Patentinhaber: ABB AG, 68309 Mannheim (DE)
(72) Erfinder: Roth, Michael, 77880 Sasbach (DE)

(56) Entgegenhaltungen:
- DE-A1- 19 721 557
- DE-C1- 19 911 631
- DE-U1- 8 432 766
- DE-U1- 9 213 277

## Beschreibung

Die Erfindung betrifft einen elektrischen Schalt- und/oder Verteilerschrank mit darin vorgesehenen Zähler- und Verteilerfeldern, in welchen Tragprofile zur Befestigung von elektrischen und/oder elektronischen Komponenten wie zum Beispiel elektrische Zähler und Sicherungsautomaten vorgesehen sind, wobei die Tragprofile als C-Profile oder als U-Profile ausgebildet sind.

Aus der DE8432766 U1 ist ein Bausatz für Montagevorrichtungen für elektrische Schalt- oder Verteilerschränke bekannt geworden, der aus zahlreichen Einzelteilen besteht, die miteinander die unterschiedlichste Innenaufteilung und Innengestaltung der betraffenden elektrischen Schalt- oder Verteilerschränke gestattet.

Aus der DE 92 13 277 U1 ist eine Befestigungsvorrichtung für Schienen wie beispielsweise Montageschienen und dgl. unter einem Winkel von beispielsweise 45° in Schaltschränken angegeben, wobei ein Befestigungselement vorgesehen ist, welches als im Querschnitt dreieckförmiger Befestigungsblock mit zwei im spitzen Winkel zueinander stehenden Befestigungsflächen ausgebildet ist.

Von nicht unerheblichem Nachteil sind die große Anzahl an Einzelteilen sowie die unterschiedlichen Formgebungen, welche verhindern, dass bestimmte Teile mit anderen kombiniert werden können.

So gelangen bislang für Verteilerfelder in der Bauhöhe 1800mm und 2100mm vorzugsweise C-Profile, beispielsweise mit den Maßen 40 x 20 mm, zur Anwendung, um eine für diese Bauhöhe ausreichende Stabilität zu erhalten. Dagegen werden für Zähler- und Verteilerfelder der Bauhöhen 450mm bis 1350mm vorzugsweise U-Profile mit den Maßen 16 x 20mm verwendet.

Wegen dieser unterschiedlichen Profilformen und Profilmaße sind für die entsprechenden Zähler·und Verteilergehäuse sehr viele verschiedene Aufnahmeelemente vorzusehen, die mit den jeweiligen Profilen zusammen pasten

Diese unterschiedlichen Profile resultieren In unterschiedlichen Schranktypen, die jeweils nur für eine bestimmte Profilart, nämlich C-Profll beziehungsweise U-Profil, vorgesehen sind und dementsprechend nur für dieses Profil passen.

Ausgehend von diesem Stand der Technik ist es Aufgabe der Erfindung, einen elektrischen Schalt- und Verteilerschrank der eingangs genannten Art zu schaffen, bei welchem der Innenausbau im Hinblick auf die jeweils benötigten Einteilungen und darin anzuordnenden elektrischen Komponenten mit möglichst wenig Aufwand gewährleistet ist.

Dabei sollte die Vielzahl unterschiedlicher Profilaufnahmevorrichtungen vermieden und stattdessen eine Vereinheitlichung der Aufhahmen gefunden werden, die es erlaubt, unterschiedliche Profilarten, zum Beispiel C- und U-Profil, in einem Aufnahmeelement einbauen zu können, ohne dass ein zusätzlicher Umbau oder ein neuer Schranktyp notwendig wird.

Ferner sollte eine einfache Verstellmöglichkeit für das Aufnahmeelement in der Schranktiefe gewährleistet sein, so dass die Aufnahmeelemente auch für verschiedene Schranktiefen verwendet werden können. Schließlich sollte vorgesehen sein, mit den gleichen Aufnahmeteilen bei Schränken der Bauhöhe 1800mm alternativ auch U-Profile einbauen zu können, welche je nach Feldhöhe i gegebenenfalls in der Mitte der Schrankhöhe abgefangen werden.

Diese Aufgabe wird erfindungsgemäß durch die kennzeichnenden Merkmale des Anspruches 1 gelöst.

Demgemäss ist erfindungsgemäß eine Gleitschiene in Verbindung mit wenigstens einer Aufnahmevorrichtung zur Aufnahme eines Tragprofils vorgesehen, wobei die Tragprofile hinsichtlich ihrer Form, Profilierung und Abmessungen verschieden sind. Ferner ist die Gleitschiene ortsfest an vorbestimmten Positionen mit der betreffenden Wandung des Schalt- und/oder Verteilerschranks verbunden und schließlich ist die jeweilige Aufnahmevorrichtung an der Gleitschiene örtlich fixierbar.

Gemäß der Erfindung ist die Gleitschiene an die jeweilige Bautiefe des betreffenden Schalt- und/oder Verteilerschranks angepasst und mit einem Einstellraster versehen, welches es erlaubt, die vorgesehene Aufnahmevorrichtung formschlüssig zu positionieren.

Diese Gestaltungsmöglichkeit ist vorteilhaft im Hinblick auf die unterschiedlichen Bautiefen der einzelnen betrachteten elektrischen Schalt- und Verteilerschränke, da ein erfindungsgemäßes Gleitprofil quasi in beliebiger Länge zur Verfügung steht und dementsprechend an jede erforderliche Länge anpassbar ist.

Vorzugsweise ist in besonderer Verbesserung der Erfindung vorgesehen, dass zur Befestigung der Gleitschiene an der Schrankwandung Schraubbolzen angeschweißt sind, an welchen die Gleitschiene mit der betreffenden Schrankwandung fixiert ist

Gemäß einer bevorzugten Ausführungsform der Erfindung ist jedes für die Aufnahme einer elektrischen und/oder elektronischen Komponente vorgesehene Tragprofl an jedem Einbauort der Aufnahmevorrichtung einbaubar, wobei es lediglich auf das erforderliche Maß abzulängen und mit der am vorgesehenen Einbauort angeordneten Aufnahmevorrichtung zu verbinden ist.

In Weiterbildung der Erfindung ist die bereits erwähnte Aufnahmevorrichtung dadurch gekennzeichnet, dass sie zur Verankerung eines Tragprofils an der-Gleitschiene dient und vorzugsweise ein aus einem metallischen Druckguss, vorzugsweise aus Zinkdruckguss oder Aluminiumdruckguss, gefertigtes Formteil ist.

Alternativ kann die zur Verankerung eines Profils an der Gleitschiene vorgesehene Aufnahmevorrichtung ein aus Blech geformtes Stanzbiegeteil sein sowie in besonderen Fällen auch ein Kunststoffformteil.

Die Aufnahmevorrichtung ist hinsichtlich ihrer Anschlussform sowohl an die Gleitschiene als auch an die verschiedenen Tragprofile angepasst, so dass im Unterschied zu seitherigen elektrischen Schalt- und/oder Verteilerschränken gemäß der Erfindung nunmehr innerhalb desselben Schrankes unterschiedliche Profile für die betreffenden elektrischen Geräte einbaubar sind, ohne dass große vorherige Umbauten oder Umrüstungen erforderlich sind.

In weiterer Ausgestaltung der Erfindung ist ein Feldaufnahmeelement vorgesehen, welches zur Einrichtung von Schaltfeldem dient und formschlüssig mit der Aufnahmevorrichtung verbunden ist. Vorzugsweise ist dieses Feldaufnahmeelement aus einem zähen Kunststoff gebildet, zum Beispiel PS (Polystyrol) oder PA (Polyamid) alternativ auch Aluminiumdruckguss, wobei es hinsichtlich seiner Formgebung an die Aufnahmevorrichtung angepasst ist, so dass es problemlos überall dort, wo eine erfindungsgemäße Aufnahmevorrichtung zum Einsatz kommt, auch ein Feldaufnahmeelement einsetzbar ist.

In Weiterbildung der Erfindung ist zur Befestigung des Feldaufnahmeelements an der Aufnahmevorrichtung ein Fixierstift vorgesehen, welcher in hierfür vorgesehene Ausnehmungen in dem Feldaufnahmeelement und in der Aufnahmevorrichtung eingreift und diese, das heißt die Aufnahmevorrichtung mit der Gleitschiene, kraft- und formschlüssig miteinander verbindet.

Darüber hinaus ist zur Fixierung der Aufnahmevorrichtung an der Gleitschiene jeweils eine Fixierschraube vorgesehen, welche in hierfür vorgesehene Gewindebohrungen in der Gleitschiene eingreift und beide miteinander verbindet.

Diese und weitere vorteilhafte Ausgestaltungen und Verbesserungen der Erfindung sind Gegenstand der Unteransprüche.

Anhand eines in der beigefügten Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

Es zeigen:
- Fig. 1: eine perspektivische Ausschnittdarstellung des Inneren eines erfindungsgemäßen elektrischen Schalt- und/oder Verteilerschranks mit darin angeordneten Gleitschienen, Aufnahmevorrichtungen und Tragprofilen;
- Fig. 2: eine Gleitschiene gemäß der Erfindung;
- Fig. 3: eine erste Ausführung einer Aufnahmevorrichtung, nämlich für ein C-Profil, in einer Ansicht a) von oben und b) von unten ;
- Fig. 4: eine zweite Ausführung einer Aufnahmevorrichtung, nämlich für ein U-Profil C-Profil, in einer Ansicht a) von oben und b) von unten;
- Fig. 5: ein U-Profil als Feldaufnahmeelement in verschiedenen Ansichten, nämlich a) von oben und b) von unten ;
- Fig. 6: ein Fixierstift in Schrägansicht von oben;
- Fig. 7: eine in einem elektrischen Schalt- und/oder Verteilerschrank montierte Gleitschiene mit montierter Aufnahmevorrichtung für ein U-Profil
- Fig. 8: eine in einem elektrischen Schalt- und/oder Verteilerschrank montierte Gleitschiene mit montierter Aufnahmevorrichtung für ein U-Profil Pos. Rechts und links im Schrank und
- Fig. 9: eine Anordnung von einer in einem elektrischen Schalt- und/oder Verteilerschrank montierten Gleitschiene mit montierter Aufnahmevorrichtung für ein C-Profil sowie darin zu montierenden Feldaufnahmeelementen zur Montage der U-Profile.

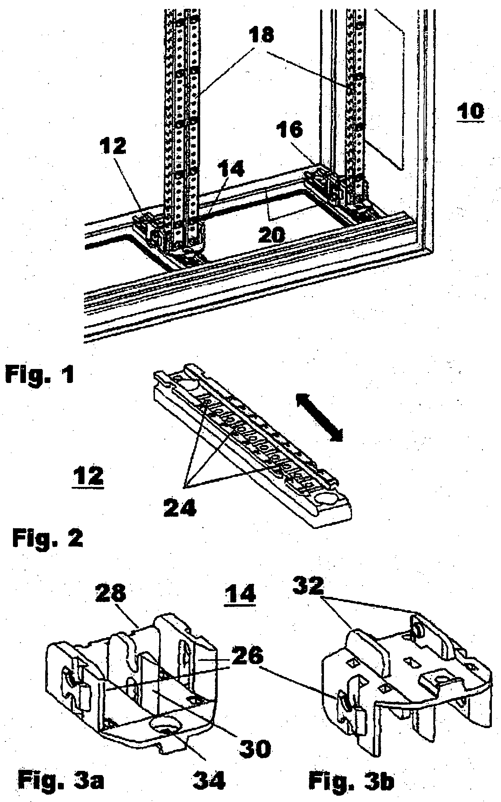

Fig. 1 zeigt eine perspektivische Ausschnittdarstellung des Inneren eines erfindungsgemäßen elektrischen Schalt- und/oder Verteilerschranks 10 mit darin angeordneten Gleitschienen 12, Aufnahmevorrichtungen 14, 16 und Tragprofilen 18 sowie darin montierten Feldaufnahmeelementen 44 zur Aufnahme der Tragprofile 18 in U-Form.

Diese ausschnittweise Darstellung soll eine Übersicht über den Umfang der vorliegenden Erfindung geben und verdeutlichen, wie die einzelnen Befestigungs- und Montageteile zusammenwirken.

Aus dieser Übersichtsdarstellung geht klar hervor, dass der Erfindung zugrundeliegende Schrank 10 von mit Versteifungsstreben 20 beplankten Seitenwänden 22 gebildet ist, wobei die Versteifungsstreben 20 beziehungsweise die Seitenwände gleichzeitig auch zur Befestigung der Montagehilfsmittel, wie Gleitschienen 12 und gegebenenfalls der Tragprofile 16 dienen, während die erwähnten Aufnahmevorrichtungen 14 als Mittler zwischen den Gleitschienen 12, mit welchen sie form- und kraftschlüssig verbunden sind, und den Tragprofilen 16 dienen, welche sie aufnehmen und deren Kräfte in die Wandstruktur des betreffenden Schrankes 10 ableiten.

In Fig 2 ist eine Gleitschiene 12 gemäß der Erfindung in Schrägansicht von oben wiedergegeben. In dieser Ansicht ist deutlich ein Muster von hintereinander liegenden Ausnehmungen 24 zu erkennen, die als Gewindebohrungen ausgebildet sind und mit Halteschrauben 26 zusammenarbeiten, mittels welcher die Aufnahmevorrichtungen 14,16 auf der Gleitschiene 12 fixiert werden.

Der Abstand der runden Ausnehmungen 24 entspricht einem konstruktiv vorgegebenen Raster, das ein bestimmtes Fixmaß, zum Beispiel 12,5 cm, einhält.

Fig. 3 zeigt eine erste Ausführung einer Aufnahmevorrichtung 14, nämlich für ein C-Profil, und zwar in einer ersten Ansicht 3 a) von oben und in einer zweiten Ansicht 3 b) von unten. Aus diesen beiden Ansichten desselben Gegenstandes ist zu ersehen, dass die Oberseite der ersten Ausführungsform der Aufnahmevorrichtung 14 zwei Seitenstege 28 aufweist, die von einem Grundsteg 30 miteinander verbunden sind und auf diese Weise den Abstand der Seitenstege 28 zueinander sichern. Zwischen den Seitenstegen ist noch ein Mittelsteg 32 vorgesehen, der zur weiteren Versteifung dient. Auf diese Weise begrenzen die Seitenstege 28, der Grundsteg 30 und der Mittelsteg 32 einen Hohlraum, auf welchen nachfolgend noch eingegangen wird.

Die Seitenstege 28 sowie der Grundsteg 30 dienen dazu, einem für diesen Fall zur Montage vorgesehenen C-Profil Halt zu geben, indem die Flanken des C-Profils die Seitenstege 28 und den Grundsteg 30 der ersten Aufnahmevorrichtung 14 enggepasst übergreifen und gegebenenfalls durch zusätzliche Stifte oder Schrauben mit der Aufnahmevorrichtung 14 zusätzlich verbunden sind.

Die Aufnahmevorrichtung ihrerseits greift mittels zweier an ihrer Unterseite angeformter Führungsstege 32 in die Gleitschiene 12 ein und wird mittels einer hier nicht gezeigten Halteschraube, die eine hierfür vorgesehene Ausnehmung 34 durchgreift, an der Gleitschiene 12 befestigt.

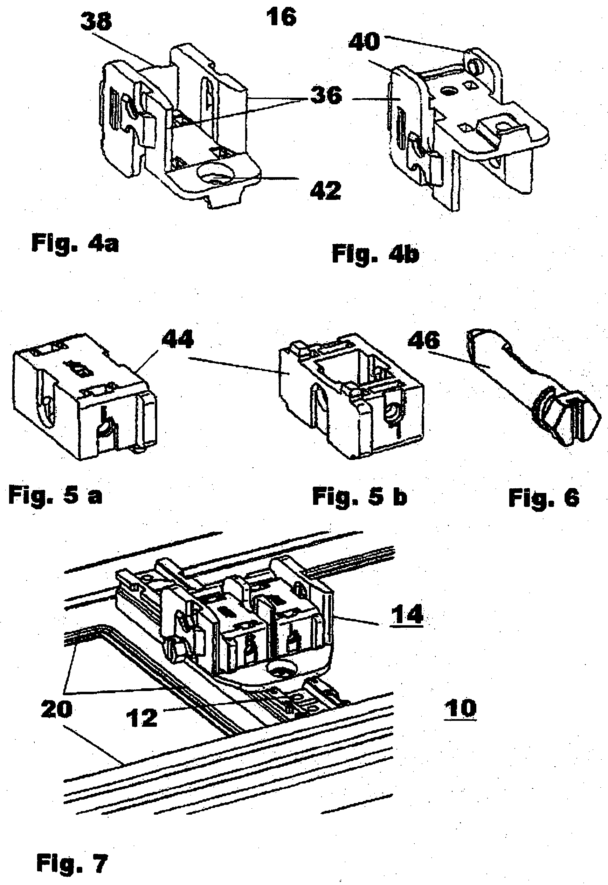

Fig. 4 zeigt eine zweite Ausführung einer Aufnahmevorrichtung 16, die für ein C-Profil bestimmt ist und die rechts und links im Schrank befestigt ist. Durch einsetzen von den Feldaufnahmeelementen 44 kann auch ein U-Profil aufgenommen werden. Das Teil wird links und rechts im Schrank auf der Gleitschiene (12) befestigt. Seine Position im Schrank ist somit links unten, rechts unten, links oben und rechts oben. Ebenfalls wird das Teil zur Befestigung der Mitteltragschiene verwendet.

Prinzipiell ist die Gestaltung der zweiten Ausführung einer Aufnahmevorrichtung 16 ähnlich der ersten Ausführung der Aufnahmevorrichtung 14, jedoch ist der Abstand zwischen den Seitenstegen 36 nur etwa halb so groß wie bei der ersten Aufnahmevorrichtung 14, so dass ein Mittelsteg entfällt und die Aufnahmevorrichtung 16 kann nur ein Rahmenprofil in der Form U oder C aufnehmen.

Auch bei dieser Ausführung ist ein Grundsteg 38 vorgesehen, der gemeinsam mit den Seitenstegen 36 einen Hohlraum begrenzt, sowie an der Unterseite angeformte Führungsstege 40, die allerdings als Verlängerung der Seitenstege 36 anzusehen sind. Ferner ist eine Ausnehmung 42 für eine Halteschraube zur Befestigung der Aufnahmevorrichtung 16 an der betreffenden Gleitschiene 12 vorgesehen.

In Fig. 5 ist ein Feldaufnahmeelement 44 in verschiedenen Ansichten, nämlich 5 a) von oben und 5 b) von unten gezeigt. Ein solches Feldaufnahmeelement 44 dient zur Einrichtung eines Schaltfeldes innerhalb eines erfindungsgemäßen elektrischen Schalt- und/oder Verteilerschranks 10 und wird im Übrigen in die von den Seitenstegen 28, 36 beziehungsweise dem Mittelsteg 32 begrenzten Hohlräume an der Oberseite der Aufnahmevorrichtungen 14,16 eingesetzt und mittels eines in Fig. 6 in Schrägansicht gezeigten Fixierstiftes 46, der seitlich die betreffende Aufnahmevorrichtung 14, 16 und das darin befindliche Feldaufnahmeelement 44 durchgreift, fixiert. Durch das Einsetzen der Feldaufnahme 44 in die Aufnahmevorrichtung 14 und 16 wird erreicht, dass das U-Profil 18 in den Schrank eingebaut werden kann.

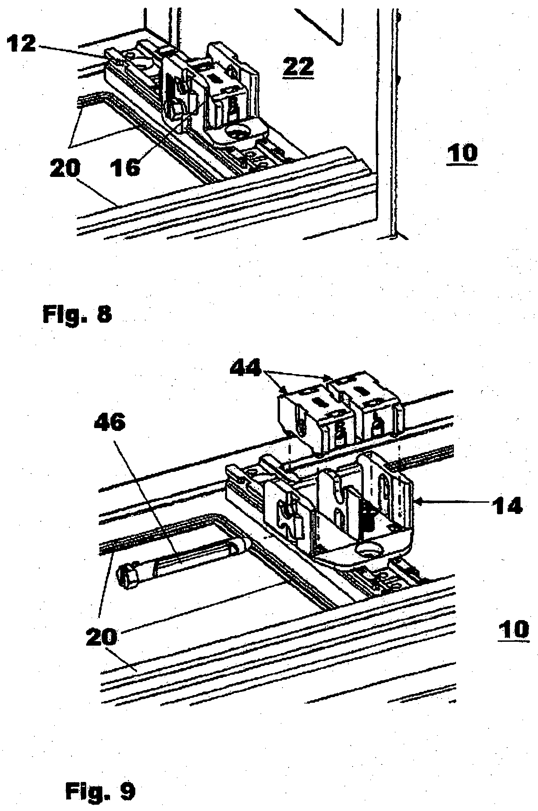

In Fig. 7 beziehungsweise Fig. 8 schließlich ist jeweils ein Teilausschnitt eines erfindungsgemäßen elektrischen Schalt- und/oder Verteilerschranks 10 wiedergegeben, wobei das erfindungsgemäß aus der Gleitschiene 12 in Zusammenarbeit mit einer ersten Aufnahmevorrichtung 14 beziehungsweise zweiten Aufnahmevorrichtung 16 für die Montage von U-förmigen Tragprofilen 18 vorgesehene System in zusammengebautem Zustand gezeigt ist.

In beiden gezeigten Fällen sind Feldaufnahmeelemente 44 in die Aufnahmevorrichtungen 14, 16 eingesetzt und mittels eines Fixierstiftes 46 lagefest gesichert. Dies ermöglicht den Einbau der U-Profile 18. Würde hingegen bei diesem Aufbau das Feldaufnahmeelement 44 entfernt, so könnte das C-Profil 16 eingebaut werden, welches ebenfalls mit dem Fixierstift 46 befestigt wird.

Der Fixierstift 46 ist im Übrigen mit einem selbstschneidenden Gewindekopf versehen, so dass zu seiner Befestigung prinzipiell keine Gewindebohrung erforderlich ist, sondern die durch den Selbstschneidegewindekopf vorgesehene formschlüssige Verankerung erfolgt quasi von selbst, wenn der Fixierstift 46 eingeschraubt wird.

Darüber hinaus wird der Fixierstift (46) auch zur Verbindung beziehungsweise Befestigung der C-Profile in der Aufnahmevorrichtung 14 und 16 verwendet.

In Fig. 9 ist eine Anordnung von einer in einem elektrischen Schalt- und/oder Verteilerschrank 10 montierten Gleitschiene 12 mit daran montierter Aufnahmevorrichtung 14 für ein U-Profil 18 sowie darin zu montierenden Feldaufnahmeelementen 44 wiedergegeben, wobei diese Darstellung verdeutlicht, dass die Feldaufnahmeelemente 44 jeweils von oben in die betreffenden Hohlräume an der Aufnahmevorrichtung 14 eingesetzt werden.

Dabei gehört zu einer vorteilhaften Ausführungsform der Erfindung auch die Tatsache, dass die Größe der vorerwähnten, von den Seitenstegen 28, 36 und den Grundstegen 30, 38 sowie dem Mittelsteg 40 im Falle der ersten Aufnahmevorrichtung 14 und 16 für ein C-Profil jeweils gleich ist, so dass die ebenfalls zum Einsatz kommenden Feldaufnahmeelemente 44 eine einheitliche Größe besitzen und sowohl in die Hohlräume der ersten Aufnahmevorrichtung 14 als auch in die Hohlräume der zweiten Aufnahmevorrichtung 16 passgenau eingreifen.

### Bezugszeichenliste

- 10: elektrischer Schatt- und/oder Ver- teilerschrank
- 12: Gleitschiene Feldaufnahmeelemente
- 44 14: erste Aufnahmevorrichtung
- 16: zweite Aufnahmevorrichtung für rechts oben und unten sowie links oben und unten
- 18: Tragprofile
- 20: Versteifungsstreben
- 22: Seitenwand
- 24: Ausnehmung
- 26: Seitensteg
- 28: Grundsteg
- 30: Mittelsteg
- 32: Führungssteg
- 34: Ausnehmung
- 36: Seitensteg
- 38: Grundsteg
- 40: Führungssteg
- 42: Ausnehmung
- 44: Feldaufnahmeelement für U-Profil
- 46: Fixierstift für die Befestigung des C-Profils und zur Befestigung der

## Patentansprüche

1. Elektrischer Schalt- und/oder Verteilerschrank (10) mit darin vorgesehenen Zähler- und Verteilerfeldern, in welchen Tragprofile (18) zur Befestigung von elektrischen und/oder elektronischen Komponenten, wie zum Beispiel elektrische Zähler und Sicherungsautomaten, vorgesehen sind, wobei die Tragprofile (18) als C-Profile oder als U-Profile ausgebildet sind, wobei eine Gleitschiene (12) in Verbindung mit wenigstens einer Aufnahmevorrichtung (14, 16) zur Aufnahme eines Tragprofils (18) vorgesehen ist, wobei die Tragprofile (18) hinsichtlich ihrer Form, Profilierung und Abmessungen verschieden sind, dass die Gleitschiene (12) ortsfest an vorbestimmten Positionen mit der betreffenden Wandung (20) des Schalt- und/oder Verteilerschranks (10) verbunden ist und dass die jeweilige Aufnahmevorrichtung (14, 16) an der Gleitschiene (12) örtlich fixierbar ist, wobei die Gleitschiene (12) an die jeweilige Bautiefe des betreffenden Schalt- und/oder Verteilerschranks (10) angepasst ist und mit einem Einstellraster versehen ist, welches es erlaubt, die vorgesehene Aufnahmevorrichtung (14, 16) formschlüssig zu positionieren, und die Aufnahmevorrichtung (14,16) mittels an ihrer Unterseite angeformter Führungsstege (32,40) in die Gleitschiene eingreift, **dadurch gekennzeichnet, dass** die Aufnahmevorrichtung (14, 16) hinsichtlich ihrer Anschlussform an die verschiedenen Tragprofile
anpassbar ist, so dass innerhalb desselben Schrankes unterschiedliche Profile für die betreffenden elektrischen Geräte einbaubar sind, ohne dass große vorherige Umbauten oder Umrüstungen erforderlich sind.

2. Elektrischer Schalt- und/oder Verteilerschrank nach Anspruch 1, **dadurch gekennzeichnet, dass** zur Befestigung der Gleitschiene (12) an der Schrankwandung (20) Schraubbolzen angeschweißt sind, an welchen die Gleitschiene (12) mit der betreffenden Schrankwandung (20) fixiert ist

3. Elektrischer Schalt- und/oder Verteilerschrank nach einem der vorherigen Ansprüche, **dadurch gekennzeichnet, dass** jedes für die Aufnahme einer elektrischen und/oder elektronischen Komponente vorgesehene Tragprofil (18) an jedem Einbauort der Aufnahmevorrichtung (14, 16) einbaubar ist, wobei es lediglich auf das erforderliche Maß abzulängen ist.

4. Elektrischer Schalt- und/oder Verteilerschrank nach einem der vorherigen Ansprüche, **dadurch gekennzeichnet, dass** die zur Verankerung eines Tragprofils (18) an der Gleitschiene (12) vorgesehene Aufnahmevorrichtung (14, 16) ein aus einem metallischen Druckguss, vorzugsweise Zinkdruckguss oder Aluminiumdruckguss, gefertigtes Formteil ist.

5. Elektrischer Schalt- und/oder Verteilerschrank nach einem der Ansprüche 1 bis 3, **dadurch gekennzeichnet, dass** die zur Verankerung eines Tragprofils (18) an der Gleitschiene (12) vorgesehene Aufnahmevorrichtung (14, 16) ein aus Blech geformtes Stanzbiegeteil ist.

6. Elektrischer Schalt- und/oder Verteilerschrank nach einem der Ansprüche 1 bis 3, **dadurch gekennzeichnet, dass** die zur Verankerung eines Tragprofils (18) an der Gleitschiene (12) vorgesehene Aufnahmevorrichtung (14, 16) ein Kunststoffformteil ist.

7. Elektrischer Schalt- und/oder Verteilerschrank nach einem der vorherigen Ansprüche, **dadurch gekennzeichnet, dass** die Aufnahmevorrichtung (14, 16) hinsichtlich ihrer Anschlussform sowohl an die Gleitschiene (12) als auch an die verschiedenen Tragprofile (18) angepasst ist.

8. Elektrischer Schalt- und/oder Verteilerschrank nach einem der vorherigen Ansprüche, **dadurch gekennzeichnet, dass** ein Feldaufnahmeelement (44) vorgesehen ist, welches zur Einrichtung von Schaltfeldern dient und formschlüssig mit der Aufnahmevorrichtung (14, 16) verbunden ist

9. Elektrischer Schalt- und/oder Verteilerschrank nach Anspruch 8, **dadurch gekennzeichnet, dass** zur Befestigung des Feldaufnahmeelements (44) an der Aufnahmevorrichtung (14, 16) ein Fixierstift (46) vorgesehen ist, welcher in hierfür vorgesehene Ausnehmungen in dem Feldaufnahmeelement (44) und in der Aufnahmevorrichtung (14, 16) eingreift und diese kraft- und formschlüssig miteinander verbindet.

10. Elektrischer Schalt- und/oder Verteilerschrank nach einem der vorherigen Ansprüche, **dadurch gekennzeichnet, dass** zur Fixierung der Aufnahmevorrichtung (14, 16) an der Gleitschiene (12) jeweils eine Fixierschraube vorgesehen ist, welche in hierfür vorgesehene Bohrungen in der Gleitschiene (12) eingreift und beide miteinander verbindet.

## Claims

1. Electrical switchgear and/or distribution cabinet (10) having meter and distribution panels provided therein, in which supporting profiles (18) are provided for attachment of electrical and/or electronic components, such as electricity meters and automatic circuit breakers, with the supporting profiles (18) being in the form of C profiles or U profiles, with a sliding rail (12) being provided, connected to at least one holding apparatus (14, 16) for holding a supporting profile (18), with the supporting profiles (18) having different shapes, profiles and dimensions, in that the sliding rail (12) is connected in a fixed position, at predetermined positions, to the relevant wall (20) of the switchgear and/or distribution cabinet (10), and in that the respective holding apparatus (14, 16) can be fixed in position on the sliding rail (12), with the sliding rail (12) being matched to the respective physical depth of the relevant switchgear and/or distribution cabinet (10), and being provided with an adjusting grid, which allows the holding apparatus (14, 16) which is provided to be positioned in an interlocking manner and the holding apparatus (14, 16) engaging in the sliding rail by means of guide webs (32, 40), which are integrally formed on its lower face, **characterized in that** the connection form of the holding apparatus (14, 16) can be matched to the various supporting profiles, such that different profiles can be installed within the same cabinet for the relevant electrical appliances, without any need for the major previous conversions or changes.

2. Electrical switchgear and/or distribution cabinet according to Claim 1, **characterized in that** threaded bolts are welded to the cabinet wall (20) for attachment of the sliding rail (12), to which threaded bolts the sliding rail (12) is fixed, with the relevant cabinet wall (20).

3. Electrical switchgear and/or distribution cabinet according to one of the preceding claims, **characterized in that** each supporting profile (18) which is provided for holding an electrical and/or electronic component can be fitted at any installation location of the holding apparatus (14, 16), and just needs to be cut to the required length.

4. Electrical switchgear and/or distribution cabinet according to one of the preceding claims, **characterized in that** the holding apparatus (14, 16), which is provided for anchoring a supporting profile (18) to the sliding rail (12), is a moulding manufactured from a metallic casting, preferably a zinc casting or aluminium casting.

5. Electrical switchgear and/or distribution cabinet according to one of Claims 1 to 3, **characterized in that** the holding apparatus (14, 16), which is provided for anchoring a supporting profile (18) to the sliding rail (12), is a stamped and bent part shaped from sheet metal.

6. Electrical switchgear and/or distribution cabinet according to one of Claims 1 to 3, **characterized in that** the holding apparatus (14, 16), which is provided for anchoring a supporting profile (18) to the sliding rail (12) is a plastic moulding.

7. Electrical switchgear and/or distribution cabinet according to one of the preceding claims, **characterized in that** the connection form of the holding apparatus (14, 16) is matched both to the sliding rail (12) and to the various supporting profiles (18).

8. Electrical switchgear and/or distribution cabinet according to one of the preceding claims, **characterized in that** a panel holding element (44) is provided, is used for installation of switch panels and is connected in an interlocking manner to the holding apparatus (14, 16).

9. Electrical switchgear and/or distribution cabinet according to Claim 8, **characterized in that** a fixing pin (46) is provided for attachment of the panel holding element (44) to the holding apparatus (14, 16), engages in recesses provided for this purpose in the panel holding element (44) and in the holding apparatus (14, 16), and connects them to one another in a force-fitting and interlocking manner.

10. Electrical switchgear and/or distribution cabinet according to one of the preceding claims, **characterized in that** a fixing screw is in each case provided for fixing the holding apparatus (14, 16) to the sliding rail (12), engages in holes provided for this purpose in the sliding rail (12), and connects the two to one another.

## Revendications

1. Armoire de commutation et/ou de distribution électrique (10) dans laquelle il est prévu des panneaux de compteurs et de distributeurs, dans laquelle il est prévu des profilés porteurs (18) destinés à la fixation de composants électriques et/ou électroniques, comme par exemple des compteurs électriques et des disjoncteurs, dans laquelle les profilés porteurs (18) sont réalisés sous la forme de profilés en C ou sous la forme de profilés en U, dans laquelle il est prévu une glissière (12) reliée à au moins un dispositif de réception (14, 16) destiné à recevoir un profilé porteur (18), dans laquelle les profilés porteurs (18) diffèrent par leur forme, leur profilage et leurs dimensions, dans laquelle la glissière (12) est reliée de manière stationnaire en des positions prédéterminées à la paroi (20) concernée de l'armoire de commutation et/ou de distribution (10) et dans laquelle le dispositif de réception (14, 16) respectif peut être fixé de manière stationnaire à la glissière (12), dans laquelle la glissière (12) est adaptée à la profondeur de l'armoire de commutation et/ou de distribution (10) concernée et est pourvue d'une grille de réglage qui permet de positionner par complémentarité de forme le dispositif de réception (14, 16) prévu, et le dispositif de réception (14, 16) s'engage dans la glissière au moyen de nervures de guidage (32, 40) formées sur sa face inférieure, **caractérisée en ce que** le dispositif de réception (14, 16) peut être adapté à des profilés à l'intérieur d'une même armoire, qui diffèrent par leur forme de raccordement, de manière à ce que des profilés différents puissent être intégrés à l'intérieur d'une même armoire pour les appareils électriques concernés sans qu'il soit nécessaire d'effectuer des modifications ou des réaménagements préalables importants.

2. Armoire de commutation et/ou de distribution électrique selon la revendication 1, **caractérisée en ce que**, pour fixer la glissière (12) à la paroi (20) de l'armoire, des boulons filetés sur lesquels la glissière (12) est fixée à la paroi (20) concernée de l'armoire sont soudés.

3. Armoire de commutation et/ou de distribution électrique selon l'une quelconque des revendications précédentes, **caractérisée en ce que** chaque profilé porteur (18) prévu pour la réception d'un composant électrique et/ou électronique peut être monté à chaque emplacement de montage du dispositif de réception (14, 16), dans laquelle ledit profilé doit uniquement être sectionné à la dimension nécessaire.

4. Armoire de commutation et/ou de distribution électrique selon l'une quelconque des revendications précédentes, **caractérisée en ce que** le dispositif de réception (14, 16) prévu pour l'ancrage d'un profilé porteur (18) à la glissière (12) est une pièce moulée réalisée à partir d'un moulage par injection métallique, de préférence par moulage par injection de zinc ou par moulage par injection d'aluminium.

5. Armoire de commutation et/ou de distribution électrique selon l'une quelconque des revendications 1 à 3, **caractérisée en ce que** le dispositif de réception (14, 16) prévu pour l'ancrage d'un profilé porteur (18) à la glissière (12) est une pièce pliée par estampage façonnée à partir d'une tôle métallique.

6. Armoire de commutation et/ou de distribution électrique selon l'une quelconque des revendications 1 à 3, **caractérisée en ce que** le dispositif de réception (14, 16) prévu pour l'ancrage d'un profilé porteur (18) à la glissière (12) est une pièce moulée en matière plastique.

7. Armoire de commutation et/ou de distribution électrique selon l'une quelconque des revendications précédentes, **caractérisée en ce que** le dispositif de réception (14, 16) est adapté en ce qui concerne sa forme de raccordement non seulement à la glissière (12) mais aussi aux différents profilés porteurs (18).

8. Armoire de commutation et/ou de distribution électrique selon l'une quelconque des revendications précédentes, **caractérisée en ce qu'**il est prévu un élément de réception de panneaux (44) qui est utilisé pour la mise en place de panneaux de commutation et est relié par complémentarité de forme au dispositif de réception (14, 16).

9. Armoire de commutation et/ou de distribution électrique selon la revendication 8, **caractérisée en ce qu'**il est prévu, pour fixer l'élément de réception de panneaux (44) au dispositif de réception (14, 16), une tige de fixation (46) qui s'engage dans des évidements prévus à cet effet dans l'élément de réception de panneaux (44) et dans le dispositif de réception (14, 16) et qui les relie l'un à l'autre par complémentarité de force et de forme.

10. Armoire de commutation et/ou de distribution électrique selon l'une quelconque des revendications précédentes, **caractérisée en ce qu'**il est prévu, pour fixer le dispositif de réception (14, 16) à la glissière (12), une vis de fixation respective qui s'engage dans des alésages prévus à cet effet dans la glissière (12) et qui les relie tous deux l'un à l'autre.
